(19) Europäisches Patentamt
European Patent Office
Office européen des brevets

(11) **EP 4 648 504 A1**

(12) **EUROPEAN PATENT APPLICATION**
published in accordance with Art. 153(4) EPC

(43) Date of publication:
**12.11.2025 Bulletin 2025/46**

(21) Application number: **24757270.4**

(22) Date of filing: **15.02.2024**

(51) International Patent Classification (IPC):
**H04W 64/00** (2009.01)   **H04W 76/28** (2018.01)
**H04W 24/08** (2009.01)   **H04W 48/08** (2009.01)

(52) Cooperative Patent Classification (CPC):
**H04W 24/08; H04W 48/08; H04W 64/00;**
**H04W 76/28**

(86) International application number:
**PCT/KR2024/095193**

(87) International publication number:
**WO 2024/172550 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.02.2023 KR 20230021386**

(71) Applicant: **Samsung Electronics Co., Ltd.**
**Suwon-si, Gyeonggi-do 16677 (KR)**

(72) Inventors:
• **KIM, Sangbum**
**Suwon-si, Gyeonggi-do 16677 (KR)**
• **AGIWAL, Anil**
**Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR PREDICTING TERMINAL MOBILITY IN NEXT GENERATION MOBILE COMMUNICATION SYSTEM**

(57) The disclosure relates to a 5G or 6G communication system for supporting a higher data transmission rate. According to the present disclosure, whether a terminal is moving at low speed can be efficiently determined even in a non-active period due to a cell discontinuous transmission (DTX)/discontinuous reception (DRX) operation.

FIG. 10

UE operation

Receives configuration via System Information or dedicated signalling — j-05

Starts evaluating if criterion(s) for Low Mobility has met — j-10

Identifies that the non-active period occurs — j-15

Keeps evaluating according to the invention — j-20

Performs relaxed measurement for Low Mobility, if considering the criterion as satisfied — j-25

**Description**

[Technical Field]

The disclosure relates to UE and gNB operations in a wireless communication system and, more particularly, to a method and a device for predicting mobility of a UE according to operation of cell discontinuous transmission (DTX)/discontinuous reception (DRX).

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

Meanwhile, the need for a method of predicting mobility of a UE according to operation of cell discontinuous transmission (DTX)/discontinuous reception (DRX) has emerged.

[Disclosure]

[Technical Problem]

An aspect of the disclosure is to provide a method and a device for determining whether a UE is in a low-mobility state according to operation of cell discontinuous transmission (DTX)/discontinuous reception (DRX).

[Technical Solution]

A control method performed by a terminal according to an embodiment of the disclosure to solve the problem may include receiving a control message including configuration information related to cell discontinuous transmission (DTX)/discontinuous reception (DRX) and configuration information related to relaxed measurement from a base station, determining whether a relaxed measurement performance condition is satisfied for the terminal, based on the configuration information related to the relaxed measurement, identifying that a duration in which at least one of a synchronization signal or a reference signal is not received from the base station is initiated based on the configuration information related to the cell DTX/DRX when the relaxed measurement performance condition is satisfied for the terminal, and determining whether the relaxed measurement performance condition is satisfied for the terminal during the duration according to a value for a received signal strength acquired before the duration is initiated based on an identification result.

A terminal according to another embodiment of the disclosure may include a transceiver and a controller configured to perform control to receive a control message including configuration information related to cell discontinuous transmission (DTX)/discontinuous reception (DRX) and configuration information related to relaxed measurement from a base station through the transceiver, determine whether a relaxed measurement performance condition is satisfied for the terminal, based on the configuration information related to the relaxed measurement, identify that a duration in which at least one of a synchronization signal or a reference signal is not received from the base station is initiated based on the configuration information related to the cell DTX/DRX when the relaxed measurement performance condition is satisfied for the terminal, and determine whether the relaxed measurement performance condition is satisfied for the terminal during the duration according to a value for a received signal strength acquired before the duration is initiated based on an identification result.

[Advantageous Effects]

According to an embodiment of the disclosure, it can be efficiently determined whether a UE is in a low-mobility state even during a non-active period according to operation of cell discontinuous transmission (DTX)/discontinuous reception (DRX).

[Description of Drawings]

FIG. 1 is a diagram illustrating a structure of a next-generation mobile communication system according to an embodiment of the disclosure.

FIG. 2 is a diagram illustrating a radio access state transition in the next-generation mobile communication system according to an embodiment of the disclosure.

FIG. 3 is a diagram illustrating cell discontinuous transmission (DTX)/discontinuous reception (DRX) for reducing gNB power consumption according to an embodiment of the disclosure.

FIG. 4 is a diagram illustrating an operation of determining whether the UE is in a low-mobility state according to an embodiment of the disclosure.

FIG. 5 is a diagram illustrating influence of the non-active period of cell DTX when it is determined whether the UE is in a low-mobility state according to an embodiment of the disclosure.

FIG. 6A is a diagram illustrating a first solution of determining whether the UE is in the low-mobility state during the non-active period of cell DTX according to an embodiment of the disclosure.

FIG. 6B is a diagram illustrating the first solution of determining whether the UE is in the low-mobility state during the non-active period of cell DTX according to an embodiment of the disclosure.

FIG. 7 is a diagram illustrating a second solution of determining whether the UE is in the low-mobility state during the non-active period of cell DTX according to an embodiment of the disclosure.

FIG. 8 is a diagram illustrating a third solution of determining whether the UE is in the low-mobility state during the non-active period of cell DTX according to an embodiment of the disclosure.

FIG. 9 is a diagram illustrating a fourth solution of determining whether the UE is in the low-mobility state during the non-active period of cell DTX according to an embodiment of the disclosure.

FIG. 10 is a flowchart illustrating a UE operation of determining whether the UE is in the low-mobility state during the non-active period of cell DTX according to an embodiment of the disclosure.

FIG. 11 is a flowchart illustrating a gNB operation of determining whether the UE is in the low-mobility state during the non-active period of cell DTX according to an embodiment of the disclosure.

FIG. 12 is a block diagram illustrating an internal structure of the UE according to an embodiment of the disclosure.

FIG. 13 is a block diagram illustrating a configuration of the gNB according to an embodiment of the disclosure.

[Mode for Disclosure]

Hereinafter, the operation principle of the disclosure will be described in detail with reference to the accompanying drawings. In describing the present disclosure below, a detailed description of related known configurations or functions incorporated herein will be omitted when it is determined that the detailed description thereof may unnecessarily obscure the subject matter of the disclosure. The terms which will be described below are terms defined in consideration of the functions in the present invention, and may be different according to intentions of users or operators, or customs. Therefore, the definitions of the terms should be made based on the contents throughout the specification.

The term for identifying an access node used in the following description, the term referring to a network entity, the term referring to messages, the term referring to an interface between network entities, and the term referring to various pieces of identification information, and the like are used for convenience of description. Therefore, the disclosure may not be limited by the terms provided below, and other terms referring subjects having equivalent technical meanings may be used.

Hereinafter, a base station is the entity that allocates resources to a UE and may be at least one of a gNode B, an eNode B, a Node B, a base station (BS), a radio access unit, an eNB controller, and a node on a network. A terminal may include a user equipment (UE), a mobile station (MS), a cellular phone, a smart phone, a computer, and a multimedia system capable of performing a communication function. In the disclosure, downlink (DL) refers to a wireless transmission path of a signal which the BS transmits to the UE, and uplink (UL) refers to a wireless transmission path of a signal which the UE transmits to the BS. Further, hereinafter, an LTE or LTE-A system may be described as an example, but embodiments of the disclosure can be applied to other communication systems having a similar technical background or channel form. For example, 5G mobile communication technology (5G, new radio, or NR) developed after LTE-A may be included in systems to which the embodiments of the disclosure can be applied, and the 5G below may be the concept including the conventional LTE and LTE-A, and similar other services. The disclosure can be applied to other communication systems through some modifications without departing from the scope of the disclosure on the basis of determination by those skilled in the art. It may be understood that each block of the flowchart illustrations and combinations of the flowchart illustrations can be implemented by computer program instructions.

Since these computer program instructions can be installed in a processor for a general-purpose computer, special-purpose computer, or other programmable data processing apparatuses, the instructions which are executed via the processor of the computer or other programmable data processing apparatuses generate a means for performing the functions specified in the flowchart block(s). Since these computer program instructions can also be stored in a computer-available or computer-readable memory that can direct a computer or other programmable data processing apparatuses in order to perform functions in a particular manner, the instructions stored in the computer-available or computer-readable memory can generate manufactured items including an instruction means which performs the functions specified in the

EP 4 648 504 A1

flowchart block(s). Since the computer program instructions can be installed in a computer or other programmable data processing apparatuses, a series of operational steps may be performed in the computer or other programmable data processing apparatuses to generate a process performed by the computer, and thus the instructions which execute the computer or other programmable data processing apparatuses can provide steps for performing the functions specified in the flowchart block(s).

Further, each block may represent a portion of a module, a segment, or a code, which includes one or more executable instructions for performing the specified logical function(s). In addition, in some alternative implementations, it should be noted that the functions mentioned in the blocks can occur out of the order. For example, two blocks shown in succession can, in fact, be executed substantially concurrently, or the blocks can sometimes be executed in the reverse order, depending upon the function involved. The term "unit (or ~er)" used in the embodiments refers to a software or hardware component such as a field-programmable gate array (FPGA) or an application-specific integrated circuit (ASIC), and the "unit (or ~er)" may play roles. However, the "unit (or ~er)" is not limited to software or hardware. The "unit (or ~er)" may be constructed in an addressable storage medium or constructed to reproduce one or more processors. Accordingly, for example, the "unit (or ~er)" includes software components, object-oriented software components, components such as class components and task components, processes, functions, attributes, procedures, subroutines, segments of program code, drivers, firmware, microcode, a circuit, data, a database, data structures, tables, arrays, and parameters. Functions provided within the components and the "units or (~ers)" may be combined into a fewer number of components and "units or (~ers)" or more divided into additional components and "units or (~ers)". In addition, the components and the "units or (~ers)" may be implemented to reproduce one or more CPUs within a device or a secure multimedia card. In embodiments, the "units or (~ers)" may include one or more processors.

For convenience of description, the disclosure uses terms and names defined in 5GS and NR standards, which are the standards defined by the 3rd-generation partnership project (3GPP) organization among the existing communication standards. However, the disclosure is not limited by the terms and names, and may be identically applied to wireless communication networks following other standards. For example, the disclosure may be applied to 3GPP 5GS/NR (5th mobile communication standard).

In the following description of the disclosure, a detailed description of known configurations or functions incorporated herein will be omitted when it is determined that the detailed description may make the subject matter of the disclosure unclear. Hereinafter, embodiments of the disclosure will be described with reference to the accompanying drawings.

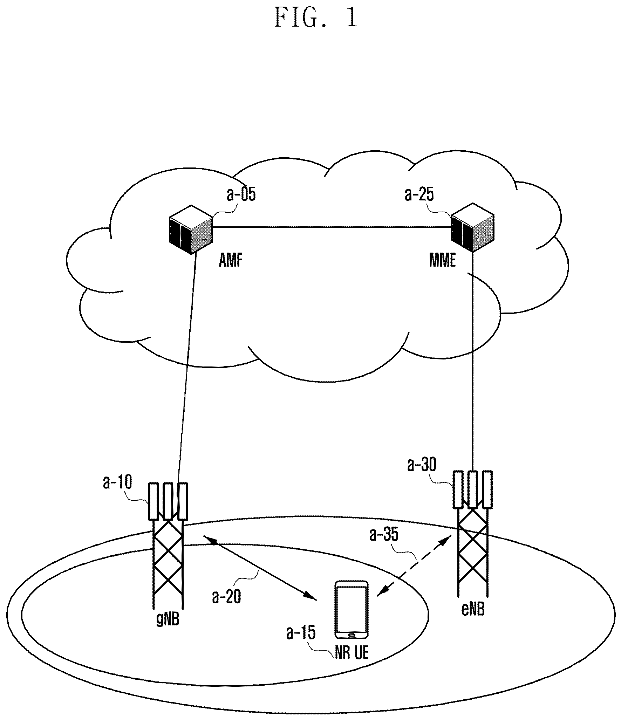

FIG. 1 is a diagram illustrating a structure of a next-generation mobile communication system.

Referring to FIG. 1, as illustrated, a radio access network of a next-generation mobile communication system (new radio (NR)) is constituted by a next-generation base station (new radio node B (gNB)) a-10 and an access and mobility management function (AMF) a-05 (new radio core network). A user terminal (terminal or new radio user equipment, hereinafter, referred to as an NR UE or a terminal) a-15 accesses an external network through the gNB a-10 and the AMF a-05.

In FIG. 1, the gNB corresponds to an evolved Node B (eNB) of the conventional LTE system. The gNB may be connected to the NR UE through a radio channel and may provide better service than the conventional node B as indicated by reference numeral a-20. Since all user traffic is served through a shared channel in the next-generation mobile communication system, a device for collecting and scheduling status information of buffer statuses, available transmission power statuses, and channel states of UEs is required, which corresponds to the gNB a-10. One gNB generally controls a plurality of cells. The gNB may have a bandwidth wider than the conventional maximum bandwidth in order to implement super-high-speed data transmission compared to conventional LTE and orthogonal frequency division multiplexing (OFDM) may be additionally combined with beamforming technology through radio access technology. Further, an adaptive modulation and coding (AMC) scheme of determining a modulation scheme and a channel coding rate is applied depending on the channel state of the UE. The AMF a-05 performs a function of supporting mobility, configuring a bearer, configuring QoS, and the like. The AMF is an entity that performs not only a function of managing mobility of the UE but also various control functions and is connected to a plurality of base stations. Further, the next-generation mobile communication system may interwork with the conventional LTE system, and the AMF is connected to an MME a-25 through a network interface. The MME is connected to an eNB a-30, which is a conventional base station. The UE supporting LTE-NR dual connectivity may transmit and receive data while maintaining the connection not only to the gNB but also to the eNB as indicated by reference numeral a-35.

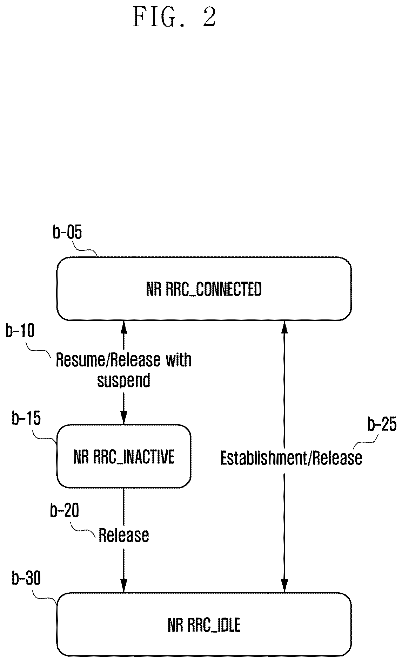

FIG. 2 is a diagram illustrating radio access state transition in the next-generation mobile communication system.

In the next-generation mobile communication system, there are three radio access states (RRC states). A connected mode (RRC_CONNECTED) b-05 is a radio access state in which the UE can transmit and receive data. An idle mode (RRC_IDLE) b-30 is a radio access state in which the UE monitors whether paging is transmitted to the UE itself. The two modes are radio access states that are also applied to the conventional LTE system, and detailed technology is the same as that of the conventional LTE system. An inactive (RRC_INACTIVE) radio access state b-15 is newly defined in the next-generation mobile communication system. In the radio access state, UE context is maintained in the gNB and the UE and RAN-based paging is supported. Characteristics of the new radio access state are listed below

- Cell re-selection mobility
- CN - NR RAN connection (both C/U-planes) has been established for UE
- The UE AS context is stored in at least one gNB and the UE
- Paging is initiated by NR RAN
- RAN-based notification area is managed by NR RAN
- NR RAN knows the RAN-based notification area which the UE belongs to;

The new INACTIVE radio access state may transition to the connected mode or the idle mode through a specific procedure. According to a resume process, the inactive mode is switched to the connected mode, and the connected mode switches to the inactive mode using a release procedure including suspend configuration information as indicated by reference numeral b-10. The procedure is constituted by one or more steps in which one or more RRC messages are transmitted and received between the UE and the gNB. Further, after resume, the inactive mode can be switched to the idle mode through a release procedure as indicated by reference numeral b-20. Switching between the connected mode and the idle mode follows the conventional LTE technology. For example, through the establishment or release procedure, switching between the modes is performed as indicated by reference numeral b-25.

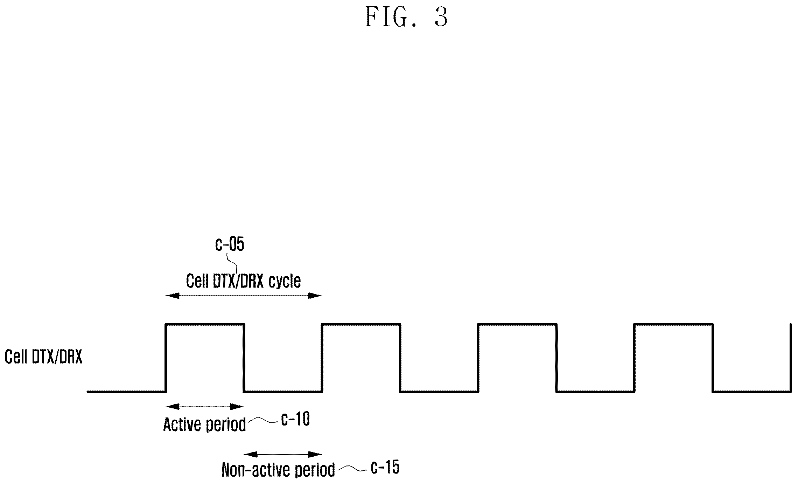

FIG. 3 is a diagram illustrating cell DTX/DRX for reducing gNB power consumption according to an embodiment of the disclosure.

In a mobile communication system, the gNB should provide service to a plurality of UEs within a service area, and thus consumes a lot of power. Accordingly, technologies for reducing the gNB power consumption are being discussed. For example, the following candidate technologies are proposed in the NR standard.

- Cell DTX/DRX
- NES-aware CHO
- SSB-less/SIB-less Cell
- Cell (Re)Selection enhancement
- UE WUS (Wake-up signal)
- UE Assistance Information for NES

Among them, cell DTX/DRX is technology of periodically turning on or off data transmission and reception. Cell DTX is technology in which the gNB turns on/off data transmission in the downlink, and cell DRX is technology in which the gNB turns on/off data reception in the uplink. Power consumption of the gNB may be significantly reduced during a time duration in which the gNB turns off data transmission and reception.

According to an embodiment of the disclosure, when cell DTX or cell DRX is operated, in every predetermined cell DTX or cell DRX cycle c-05 consisting of an active period c-10 and a non-active period c-15, the gNB may perform a predetermined operation corresponding to the period. During the active period duration, the gNB may perform general operations for providing service to the existing UE. In the non-active period, specifically, options of the gNB operation below are considered to generally turn off data transmission and reception.

- First option: gNB is expected to turn off all transmission and reception for data traffic and reference signal during Cell DTX/DRX non-active periods
- Second option: gNB is expected to turn off its transmission/reception only for data traffic during Cell DTX/DRX non-active periods (i.e., gNB will still transmit/receive reference signals)
- Third option: gNB is expected to turn off its dynamic data transmission/reception during Cell DTX/DRX non-active periods (i.e., gNB is expected to still perform transmission/reception in periodic resources, including SPS, CG-PUSCH, SR, RACH, and SRS)
- Fourth option: gNB is expected to only transmit reference signals (e.g., CSI-RS for measurement)

In the first option to the fourth option, the gNB may not broadcast a SS/PBCH block (SSB) which is a common reference signal.

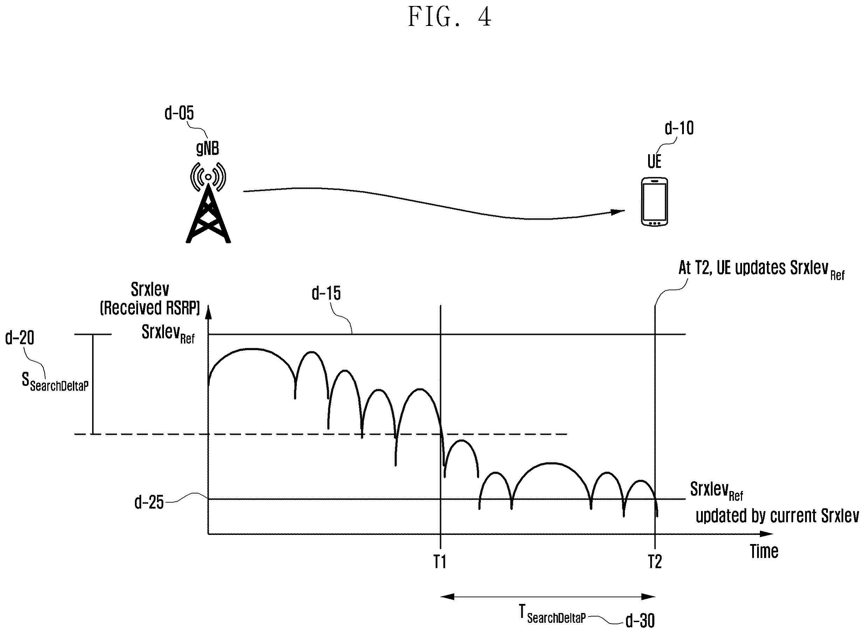

FIG. 4 is a diagram illustrating an operation of determining whether the UE is in a low-mobility state according to an embodiment of the disclosure.

The UE may use a predetermined cell measurement result to be guaranteed the mobility support. The UE may determine whether to reselect a cell through an intra-/inter-/inter-RAT cell measurement operation in the idle mode or the inactive mode. Further, the UE may collect a preset cell measurement result in the connected mode and report the same to the gNB, and thus the gNB may determine a time point at which handover is performed.

However, the cell measurement operation may consume UE power. Accordingly, when the UE is not located in a cell boundary area in which cell reselection or handover is needed and is in the low-mobility state, the UE may pause some of the intra-/inter-/inter-RAT cell measurement operations or control requirements (measurement period or the like) applied to the operations to reduce power consumption (for example, applying a longer measurement period or the like). The above content is referred to as relaxed measurement. At this time, the UE may apply equations in [Table 1] below from the TS38.304 standard document in order to determine whether the UE itself is in the low-mobility state. The following equations may be divided according to a general UE or a reduced capability (RedCap) UE.

[Table 1]

| TS38.304 |
| --- |
| 5.2.4.9.1 Relaxed measurement criterion for UE with low mobility |
| The relaxed measurement criterion for UE with low mobility is fulfilled when: |
|     - $(Srxlev_{Ref} - Srxlev) < S_{searchDeltaP}$, |
| Where: |
|     - Srxlev = current Srxlev value of the serving cell (dB). |
|     - $Srxlev_{Ref}$ = reference Srxlev value of the serving cell (dB), set as follows: |
|        - After selecting or reselecting a new cell, or |
|        - If $(Srxlev - Srxlev_{Ref}) > 0$, or |
|        - If the relaxed measurement criterion has not been met for $T_{SearchDeltaP}$: |
|          - The UE shall set the value of $Srxlev_{Ref}$ to the current Srxlev value of the serving cell. |
| (omitted) |
| 5.2.4.9.3 Relaxed measurement criterion for a stationary RedCap UE |
| The relaxed measurement criterion for a stationary RedCap UE is fulfilled when: |
|     - $(Srxlev_{RefStationary} - Srxlev) < S_{SearchDeltaP-Stationary}$, |
| Where: |
|     - Srxlev = current Srxlev value of the serving cell (dB). |
|     - $Srxlev_{RefStationary}$ = reference Srxlev value of the serving cell (dB), set as follows: |
|        - After selecting or reselecting a new cell, or - If $(Srxlev - Srxlev_{RefStationary}) > 0$, or |
|        - If the relaxed measurement criterion has not been met for $T_{SearchDeltaP-Stationary}$: |
|          - The UE shall set the value of $Srxlev_{RefStationary}$ to the current Srxlev value of the serving cell. |

According to an embodiment of the disclosure, a gNB d-05 may provide configuration values of $S_{SearchDeltaP}$ and $T_{SearchDeltaP}$ to a UE d-10 through system information. When the condition, for example, $(Srxlev_{Ref} - Srxlev) < S_{SearchDeltaP}$ (or $(Srxlev_{RefStationary} - Srxlev) < S_{SearchDeltaP-Stationary}$) is satisfied during the predetermined time duration $T_{SearchDeltaP}$ d-30 (or $T_{SearchDeltaP-Stationary}$), the UE may consider/identify/determine that the UE itself is moving at a low speed. When the condition is not satisfied, the UE may consider/identify/determine that the UE itself is not moving at a low speed. On the other hand, a value of Srxlev may be measured to have the difference of $S_{SearchDeltaP}$ d-20 from a value of $Srxlev_{Ref}$ d-15 according to the equation. Accordingly, the condition, for example, $(Srxlev_{Ref} - Srxlev) < S_{SearchDeltaP}$ (or $(Srxlev_{RefStationary} - Srxlev) < S_{SearchDeltaP-Stationary}$) may not be satisfied during the predetermined time duration $T_{SearchDeltaP}$ d-30 (or $T_{SearchDeltaP-Stationary}$). At this time, the UE may configure $Srxlev_{Ref}$ as currently measured Srxlev d-25 of the serving cell.

The Srxlev may denote a value calculated as S-criteria considering the received signal strength. For example, Srxlev may be as shown in [Equation 1] below.

[Equation 1]

$$Srxlev = Q_{rxlevmeas} - (Q_{rxlevmin} + Q_{rxlevminoffset}) - P_{compensation} - Qoffset_{temp}$$

The definition of the value stated in the description including [Equation 1] above may be as shown in [Table 2] below.

[Table 2]

| Srxlev | Cell selection RX level value (dB) |
| --- | --- |
| Squal | Cell selection quality value (dB) |

(continued)

| | |
|---|---|
| Qoffset$_{temp}$ | Offset temporarily applied to a cell as specified in TS 38. 331 [3] (dB) |
| Q$_{rxlevmeas}$ | Measured cell RX level value (RSRP) |
| Q$_{qualmeas}$ | Measured cell quality value (RSRQ) |
| Q$_{rxlevmin}$ | Minimum required RX level in the cell (dBm). If the UE supports SUL frequency for this cell, Qrxlevmin is obtai ned from *q-RxLevMinSUL,* if present, in *SIB1, SIB2* and *SIB4,* additionally, if Q$_{rxlevminoffsetcellSUL}$ is present in *SIB3* a nd *SIB4* for the concerned cell, this cell specific offset is added to the corresponding Qrxlevmin to achieve the requ ired minimum RX level in the con-cerned cell;<br><br>else Qrxlevmin is obtained from *q-RxLevMin* in *SIB1, SIB 2* and *SIB4,* additionally, if Q$_{rxlevminoffsetcell}$ is present in *SIB 3* and *SIB4* for the concerned cell, this cell specific offset is added to the corresponding Qrxlevmin to achieve the required minimum RX level in the concerned cell. |
| Q$_{qualmin}$ | Minimum required quality level in the cell (dB). Addition ally, if Q$_{qualminoffsetcell}$ is signalled for the concerned cell, th is cell specific offset is added to achieve the required mi nimum quality level in the concerned cell. |
| Q$_{rxlevminoffset}$ | Offset to the signalled Q$_{rxlevmin}$ taken into account in the Srxlev evaluation as a result of a periodic search for a hi gher priority PLMN while camped normally in a VPLMN , as specified in TS 23.122 [9]. |
| Q$_{qualminoffset}$ | Offset to the signalled Q$_{qualmin}$ taken into account in the S qual evaluation as a result of a periodic search for a high er priority PLMN while camped normally in a VPLMN, a s specified in TS 23.122 [9]. |
| P$_{compensation}$ | If the UE supports the additionalPmax in the NR-NS-Pma xList, if present, in *SIB1, SIB2* and *SIB4:*<br><br>$max(P_{EMAX1} - P_{PowerClass}, 0) - (min(P_{EMAX2}, P_{PowerClass}) - min(P_{EMAX1}, P_{PowerClass}))$ *(dB);*<br><br>*else:*<br><br>$max(P_{EMAX1} - P_{PowerClass}, 0)$ *(dB)* |
| P$_{EMAX1}$, P$_{EMAX2}$ | Maximum TX power level of a UE may use when trans mitting on the uplink in the cell (dBm) defined as P$_{EMAX}$ in TS 38.101 [15]. If UE supports SUL frequency for thi s cell, P$_{EMAX1}$ and P$_{EMAX2}$ are obtained from the *p-Max* fo r SUL in *SIB1* and *NR-NS-PmaxList* for SUL respectively in *SIB1, SIB2* and *SIB4* as specified in TS 38.331 [3], el se P$_{EMAX1}$ and P$_{EMAX2}$ are obtained from the *p-Max* and *N R-NS-PmaxList* respectively in *SIB1, SIB2* and *SIB4* for n ormal UL as specified in TS 38.331 [3]. |
| P$_{PowerClass}$ | Maximum RF output power of the UE (dBm) according t o the UE power class as defined in TS 38.101-1 [15]. |

According to another embodiment of the disclosure, even in a radio link monitoring/beam failure detecting (RLM/BFD) function, the UE may reduce requirements of the function in order to save UE power according to the low-mobility state. To this end, equations in [Table 3] below may be applied from the TS38.331 standard document.

[Table 3]

| |
|---|
| TS38.331<br>5.7.13.1 Relaxed measurement criterion for low mobility<br>The relaxed measurement criterion for UE with low mobility in RRC_CONNECTED is fulfilled when:<br>    - (SS-RSRP$_{Ref}$ - SS-RSRP) < S$_{SearchDeltaP-Connected}$,<br>Where:<br>    - SS-RSRP = current L3 RSRP measurement of the SpCell based on SSB (dB).<br>    - SS-RSRP$_{Ref}$ = reference L3 RSRP measurement of the SpCell based on SSB (dB), set as follows:<br>        - After receiving low mobility criterion configuration, or<br>- After MAC of the CG successfully completes a Random Access procedure after applying a *reconfiguration-WithSync* in *spCellConfig* of the CG while low mobility criterion is configured, or<br>    - If (SS-RSRP - SS-RSRP$_{Ref}$) > 0, or |

(continued)

| TS38.331 |
| --- |
|     - If the relaxed measurement criterion has not been met for $T_{SearchDeltaP-Connected}$:<br>        - The UE shall set the value of SS-RSRP$_{Ref}$ to the current SS-RSRP value of the SpCell. |

The gNB may provide the UE with configuration values $S_{SearchDeltaP-Connected}$ and $T_{SearchDeltaP-Connected}$ through dedicated signaling. When the condition, for example, $(SS\text{-}RSRP_{Ref} - SS\text{-}RSRP) < S_{SearchDeltaP-Connected}$ is satisfied during the predetermined time duration $T_{SearchDeltaP-Connected}$, the UE may consider/identify/determine that the UE itself is moving at a low speed. On the other hand, a value of SS-RSRP may be measured to be low with the difference of $S_{SearchDeltaP-Connected}$ from a value of SS-RSRP$_{Ref}$ determined according to the equation. Accordingly, when the condition, for example, $(SS\text{-}RSRP_{Ref} - SS\text{-}RSRP) < S_{SearchDeltaP-Connected}$ is not satisfied during the predetermined time duration $T_{SearchDeltaP-Connected}$, the UE may configure SS-RSRP$_{Ref}$ as currently measured SS-RSRP of the serving cell.

The embodiments are mainly described based on relaxed measurement but may be identically applied to an operation of evaluating the low-speed state in RLM/BFD.

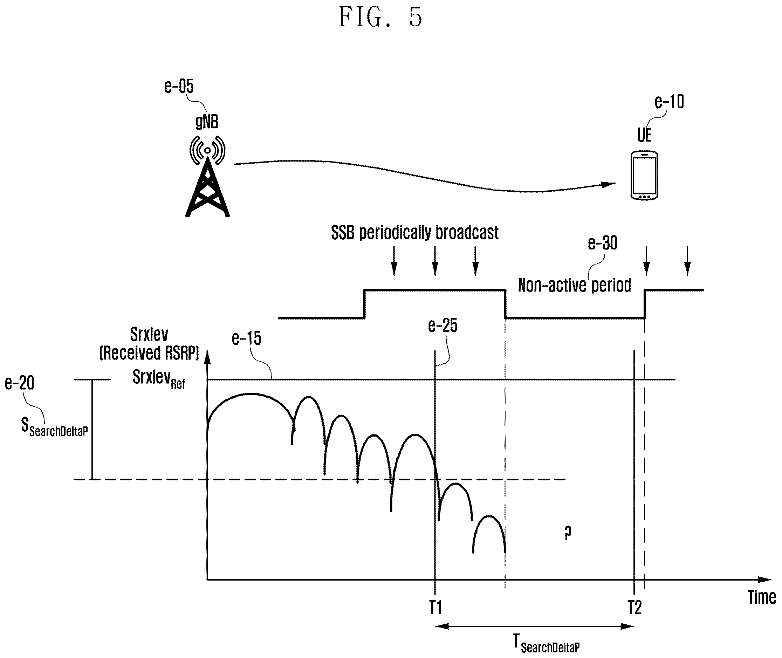

FIG. 5 is a diagram illustrating influence of the non-active period of cell DTX when it is determined whether the UE is in a low-mobility state according to an embodiment of the disclosure.

According to an embodiment, a UE e-10 receiving configuration values of $S_{SearchDeltaP}$ and $T_{SearchDeltaP}$ from a gNB e-05 may recognize that the condition $(Srxlev_{Ref} - Srxlev) < S_{SearchDeltaP}$ is not satisfied from a time point T1 e-25. Further, the UE e-10 may evaluate whether the condition is not continuously satisfied during the time duration $T_{SearchDeltaP}$.

According to an embodiment, the gNB e-05 is applying cell DTX, and a non-active period e-30 of cell DTX may arrive during $T_{SearchDeltaP}$. Since the gNB e-05 does not transmit an SSB during the non-active period, the UE e-10 cannot derive Srxlev and cannot evaluate whether the condition is satisfied. Accordingly, hereinafter, a method of solving the problem is proposed.

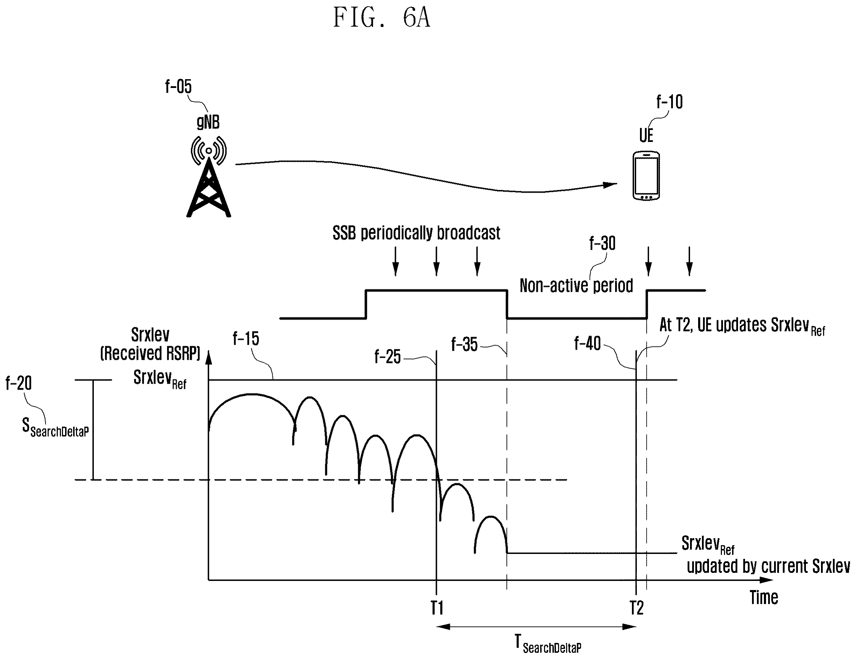

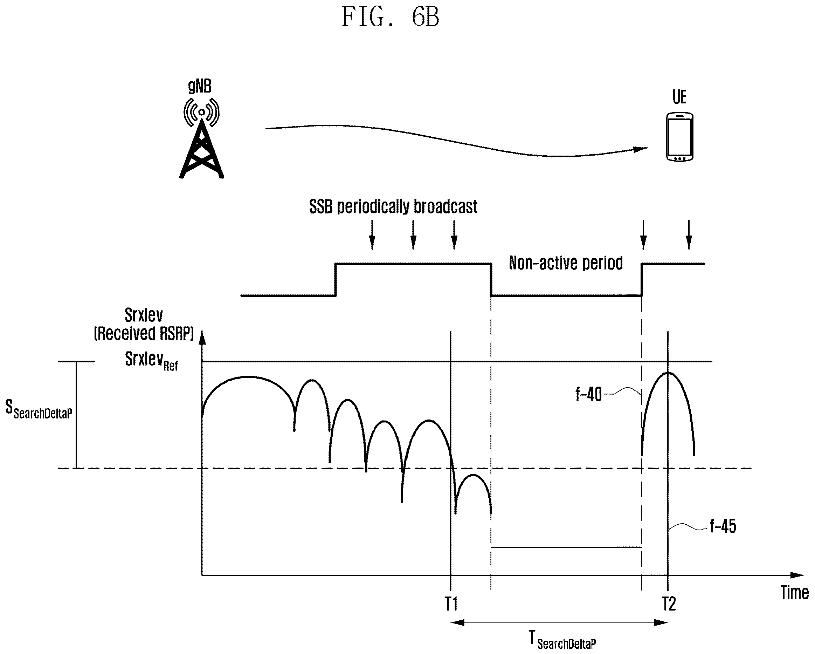

FIGS. 6A and 6B are diagrams illustrating a first solution of determining whether the UE is in a low-mobility state during a non-active period of cell DTX according to an embodiment of the disclosure.

The first solution according to an embodiment of the disclosure is characterized in that a value of Srxlev last derived from the last active period during the non-active period of cell DTX is applied to the predetermined condition equation.

A gNB f-05 may provide a UE f-10 with cell DTX pattern information and relaxed measurement configuration information through system information or dedicated signaling. According to the cell DTX, a non-active period f-30 may periodically arrive. According to an embodiment, the gNB f-05 may not transmit the SSB (or CSI-RS) during the non-active period. The UE f-10 may recognize that the condition $(Srxlev_{Ref} - Srxlev) < S_{SearchDeltaP}$ is not satisfied from a time point T1 f-25 and evaluate whether the condition is not continuously satisfied during the time duration $T_{SearchDeltaP}$ from the time point. The gNB f-05 is applying cell DTX, and the non-active period of the cell DTX may arrive from a specific time point f-35 during $T_{SearchDeltaP}$. Since the gNB f-05 does not transmit the SSB during the non-active period, the UE f-10 cannot derive the actual Srxlev. Accordingly, during the non-active period, the UE f-10 may substitute the last derived value of Srxlev into the condition instead to perform evaluation. At this time, there may be two cases.

The first case corresponds to the case (FIG. 6A) where $T_{SearchDeltaP}$ ends during the non-active period. At a time point f-40 at which $T_{SearchDeltaP}$ ends, the UE f-10 may configure the last derived value of Srxlev as new Srxlev$_{Ref}$. At this time, if the non-active period continues, the value of Srxlev applied to the equation from the time point f-40 at which $T_{SearchDeltaP}$ ends may be the same as the newly configured Srxlev$_{Ref}$ all the way. This means that a value of $(Srxlev_{Ref} - Srxlev)$ becomes 0 and thus the condition is satisfied, and when $T_{SearchDeltaP}$ passes after the time point f-40, the UE f-10 may be considered as being in the low-mobility state. However, when the UE f-10 is not actually moving at a low-speed, the assumption may cause performance deterioration. Accordingly, in order to prevent the performance deterioration, when $T_{SearchDeltaP}$ ends while the last derived value of Srxlev is applied before the non-active period, the UE f-10 may apply the existing Srxlev$_{Ref}$ without configuring the last derived value of Srxlev as new Srxlev$_{Ref}$. In another method, when $T_{SearchDeltaP}$ ends while the last derived value of Srxlev is applied before the non-active period, the UE f-10 may pause the evaluation and may be considered as not being always in the low-mobility state or may release the relaxed measurement function for a predetermined time.

The second case corresponds to the case (FIG. 6B) where $T_{SearchDeltaP}$ does not end during the non-active period. At this time, when the active period arrives as indicated by reference numeral f-40, the UE f-10 may continue to evaluate the condition by using the newly derived value of Srxlev until $T_{SearchDeltaP}$ ends as indicated by reference numeral f-45.

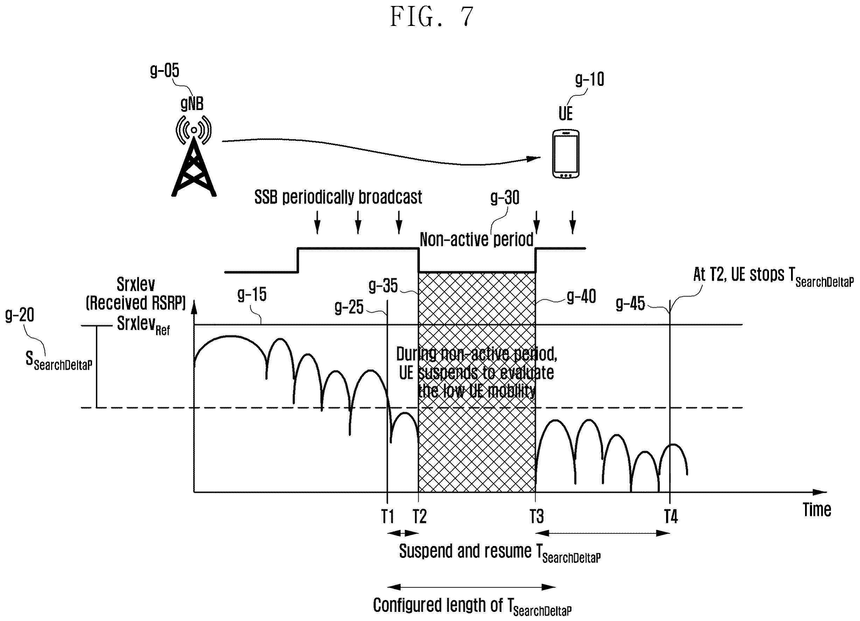

FIG. 7 is a diagram illustrating a second solution of determining whether the UE is in the low-mobility state during the non-active period of cell DTX according to an embodiment of the disclosure.

The second solution according to an embodiment of the disclosure is characterized in that the evaluation operation according to the predetermined equation is paused during the non-active period of cell DTX and the movement speed state applied to the previous active period is applied according to an embodiment of the disclosure.

A gNB g-05 may provide a UE g-10 with cell DTX pattern information and relaxed measurement configuration information through system information or dedicated signaling. According to the cell DTX, a non-active period g-30 may periodically arrive. According to an embodiment, the gNB g-05 may not transmit the SSB (or CSI-RS) during the non-active period. The UE g-10 may recognize that the condition $(Srxlev_{Ref} - Srxlev) < S_{SearchDeltaP}$ is not satisfied from a time point T1 g-25 and evaluate whether the condition is not continuously satisfied during the time duration $T_{SearchDeltaP}$. The gNB g-05 is applying cell DTX, and the non-active period of the cell DTX may arrive from a specific time point g-35 during $T_{SearchDeltaP}$. Since the gNB g-05 does not transmit the SSB during the non-active period, the UE g-10 cannot derive the real Srxlev. At this time, the UE g-10 may pause the evaluation operation. Further, the UE may apply the movement speed state (low-mobility state or non-low-mobility state) last applied during the non-active period. During the non-active period, the UE g-10 may pause a timer $T_{SearchDeltaP}$ which is running or continue to run the same. If the timer is paused, the UE g-10 may run the timer $T_{SearchDeltaP}$ again at a time point T3 g-40 at which the non-active period ends and restart the evaluation operation by applying the existing $Srxlev_{Ref}$ applied before the non-active period. If a valid value of Srxlev at the time point T3 at which the non-active period ends is larger than the existing $Srxlev_{Ref}$, the value of $Srxlev_{Ref}$ may be reconfigured as the value of Srxlev.

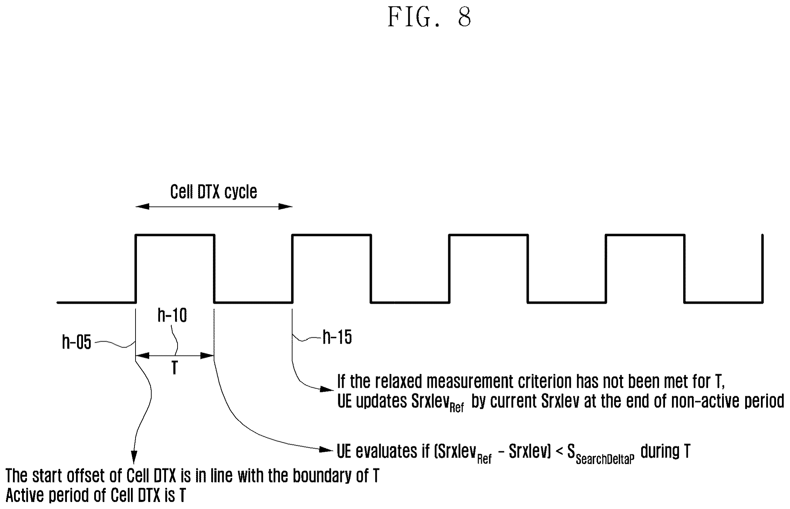

FIG. 8 is a diagram illustrating a third solution of determining whether the UE is in the low-mobility state during the non-active period of cell DTX according to an embodiment of the disclosure.

The third solution according to an embodiment of the disclosure is an operation of evaluating the condition of $(Srxlev_{Ref} - Srxlev) < S_{SearchDeltaP}$ by considering a pattern of the configured cell DTX.

According to an embodiment, a start time point of cell DTX may be the same as a start time point of $T_{SearchDeltaP}$ for evaluating the condition as indicated by reference numeral h-05. A length h-10 of $T_{SearchDeltaP}$ may be shorter than or equal to the active period of the cell DTX. At a time point at which $T_{SearchDeltaP}$ ends or a time point at which the active period of the cell DTX ends, the UE may determine whether the condition $(Srxlev_{Ref} - Srxlev) < S_{SearchDeltaP}$ is continuously satisfied during $T_{SearchDeltaP}$. If it is not satisfied, the UE may configure the value of $Srxlev_{Ref}$ as a valid value of Srxlev at the time point at which $T_{SearchDeltaP}$ ends or at the time point at which the active period of the cell DTX ends, or a valid value of Srxlev at the time point h-15 at which the non-active period of the cell DTX ends.

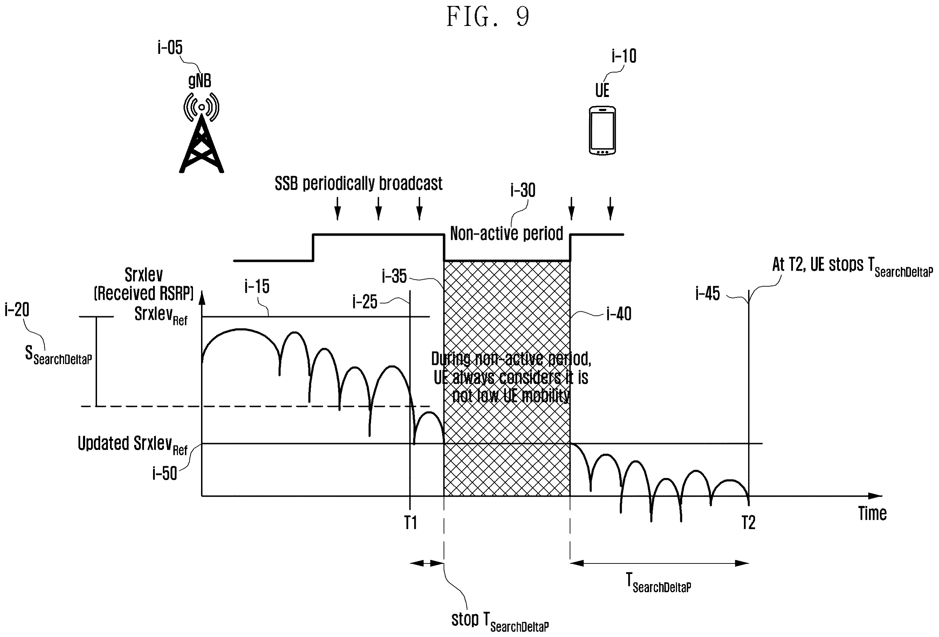

FIG. 9 is a diagram illustrating a fourth solution of determining whether the UE is in the low-mobility state during the non-active period of cell DTX according to an embodiment of the disclosure.

The fourth solution according to an embodiment of the disclosure is characterized in that it is assumed that the predetermined equation is not satisfied during the non-active period of cell DTX. The relaxed measurement is optimization technology in which no problem occurs in the network providing service to the UE even though the relaxed measurement is not configured. Accordingly, during the non-active period or when the cell DTX is applied, the UE pauses the relaxed measurement.

A gNB i-05 may provide a UE i-10 with cell DTX pattern information and relaxed measurement configuration information through system information or dedicated signaling. The configured cell DTX may be turned on/off according to predetermined L1/L2 signaling. If the cell DTX is turned on, a non-active period i-30 may periodically arrive according to the cell DTX pattern. According to an embodiment, the gNB i-05 may not transmit the SSB (or CSI-RS) during the non-active period. At this time, the UE i-10 may stop the preset relaxed measurement operation. Through predetermined L1/L2 signaling, when the cell DTX is turned off again, the UE i-10 may perform the preset relaxed measurement operation. Even though the cell DTX is applied, the UE i-10 may maintain the relaxed measurement operation. At this time, the UE i-10 may recognize that the condition $(Srxlev_{Ref} - Srxlev) < S_{SearchDeltaP}$ is not satisfied from a time point T1 i-25. Further, the UE i-10 may evaluate whether the condition is not continuously satisfied during the time duration $T_{SearchDeltaP}$. The gNB i-05 is applying cell DTX, and the non-active period of the cell DTX may arrive from a specific time point i-35 during $T_{SearchDeltaP}$. Since the gNB i-05 does not transmit the SSB during the non-active period, the UE i-10 cannot derive the real Srxlev. At this time, the UE i-10 may pause the evaluation operation and may be considered as being in the non-low-mobility state during the non-active period. During the non-active period, the UE i-10 may pause a timer $T_{SearchDeltaP}$ which is running or continue to run the same. If the timer is paused, the UE i-10 may run the timer $T_{SearchDeltaP}$ again at a time point T3 i-40 at which the non-active period ends and restart the evaluation operation by applying the existing $Srxlev_{Ref}$ applied before the non-active period. If a valid value of Srxlev at the time point T3 at which the non-active period ends is larger than the existing $Srxlev_{Ref}$, the value of $Srxlev_{Ref}$ may be reconfigured as the value of Srxlev.

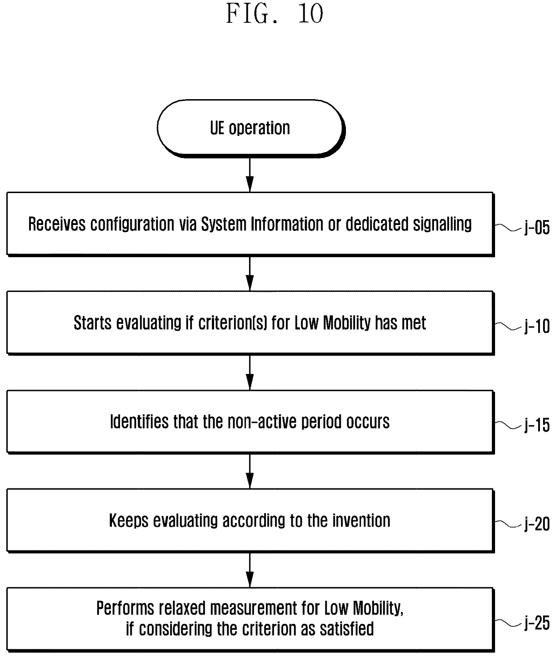

FIG. 10 is a flowchart illustrating a UE operation of determining whether the UE is in the low-mobility state during the non-active period of cell DTX according to an embodiment of the disclosure.

In step j-05, the UE may receive system information or dedicated signaling including predetermined configuration information from the gNB. The predetermined configuration information may include at least one of cell DTX pattern information, relaxed measurement configuration information, $S_{SearchDeltaP}$ and $T_{SearchDeltaP}$, or $S_{SearchDeltaP-Connected}$ and $T_{SearchDeltaP-Connected}$. In addition, the mentioned configuration information required for performing the solutions proposed in the embodiment may also be included in the predetermined configuration information.

In step j-10, the UE may evaluate whether the predetermined equation for reducing power consumption is satisfied. When the predetermined equation is satisfied, the UE may pause some operations of the intra-/inter-/inter-RAT cell measurement operations or change requirements applied to the operations to reduce power consumption. The UE may apply Srxlev to determine whether the equation is satisfied.

In step j-15, the UE may recognize that the non-active period arrives. According to an embodiment, in the non-active period, the gNB may not transmit the SSB or the CSI-RS. Accordingly, during the non-active period, the UE cannot derive Srxlev based on the measurement result.

In step j-20, the UE evaluates whether the equation is satisfied according to the embodiment.

In step j-25, the UE may pause some operations of the intra-/inter-/inter-RAT cell measurement operations or change requirements applied to the operations to reduce power consumption, based on the result according to the evaluation.

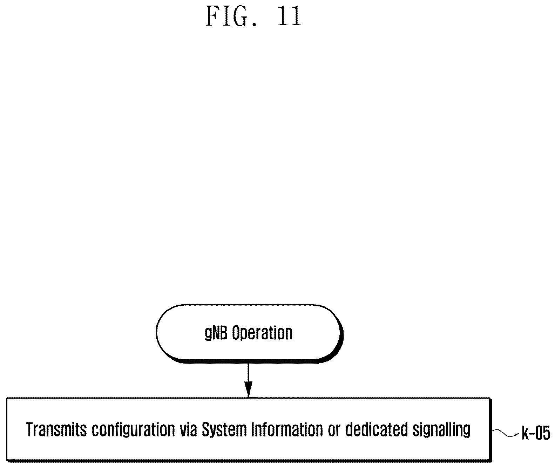

FIG. 11 is a flowchart illustrating a gNB operation of determining whether the UE is in the low-mobility state during the non-active period of cell DTX according to an embodiment of the disclosure.

In step k-05, the gNB transmit system information or dedicated signaling including predetermined configuration information to a predetermined UE. The predetermined configuration information may include at least one of cell DTX pattern information, relaxed measurement configuration information, $S_{SearchDeltaP}$ and $T_{SearchDeltaP}$, or $S_{SearchDeltaP-Connected}$ and $T_{SearchDeltaP-Connected}$. In addition, the mentioned configuration information required for performing the solutions proposed in the embodiment may also be included in the predetermined configuration information.

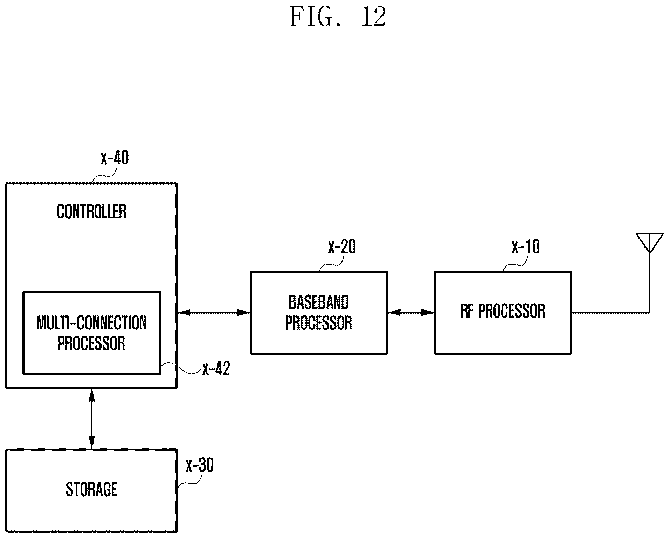

FIG. 12 is a block diagram illustrating an internal structure of the UE to which the disclosure is applied.

Referring to FIG. 12, the UE includes a radio-frequency (RF) processor x-10, a baseband processor x-20, a storage x-30, and a controller x-40.

The RF processor x-10 performs a function of transmitting and receiving a signal through a radio channel such as converting a band of the signal or amplifying the signal. That is, the RF processor x-10 up-converts a baseband signal provided from the baseband processor x-20 into an RF band signal, transmits the RF band signal through an antenna, and then down-converts the RF band signal received through the antenna into a baseband signal. For example, the RF processor x-10 may include a transmission filter, a reception filter, an amplifier, a mixer, an oscillator, a digital-to-analog converter (DAC), an analog-to-digital converter (ADC), and the like. Although FIG. 12 illustrates only one antenna, the UE may include a plurality of antennas. Further, the RF processor x-10 may include a plurality of RF chains. Moreover, the RF processor x-10 may perform beamforming. For the beamforming, the RF processor x-10 may control a phase and a size of each of the signals transmitted and received through a plurality of antennas or antenna elements. Further, the RF processor may perform MIMO and may receive a plurality of layers during the MIMO operation.

The baseband processor x-20 performs a function for a conversion between a baseband signal and a bitstream according to a physical layer standard of the system. For example, in data transmission, the baseband processor x-20 generates complex symbols by encoding and modulating a transmission bitstream. Further, in data reception, the baseband processor x-20 restores a reception bitstream by demodulating and decoding a baseband signal provided from the RF processor x-10. For example, in an orthogonal frequency division multiplexing (OFDM) scheme, when data is transmitted, the baseband processor x-20 generates complex symbols by encoding and modulating a transmission bitstream, maps the complex symbols to subcarriers, and then configures OFDM symbols through an inverse fast Fourier transform (IFFT) operation and a cyclic prefix (CP) insertion. Further, when data is received, the baseband processor x-20 divides the baseband signal provided from the RF processor x-10 in the unit of OFDM symbols, restores the signals mapped to the subcarriers through a fast Fourier transform (FFT) operation, and then restores a reception bitstream through demodulation and decoding.

The baseband processor x-20 and the RF processor x-10 may transmit and receive the signal as described above. Accordingly, the baseband processor x-20 and the RF processor x-10 may be referred to as a transmitter, a receiver, a transceiver, or a communication unit. Further, at least one of the baseband processor x-20 and the RF processor x-10 may include a plurality of communication modules to support a plurality of different radio access technologies. In addition, at least one of the baseband processor x-20 and the RF processor x-10 may include different communication modules to process signals in different frequency bands. For example, the different radio access technologies may include a wireless LAN (for example, IEEE 802.11) and a cellular network (for example, LTE). Further, the different frequency bands may include a super high frequency (SHF) (for example, 2.NRHz, NRhz) band and a millimeter (mm) wave (for example, 60 GHz) band.

The storage x-30 stores basic programs, application programs, and data such as configuration information for the operation of the UE. Particularly, the storage x-30 may store information related to a second access node that performs wireless communication using a second radio access technology. The storage x-30 provides stored data according to a request from the controller x-40.

The controller x-40 controls the overall operations of the UE. For example, the controller x-40 transmits and receives a signal through the baseband processor x-20 and the RF processor x-10. The controller x-40 records data in the storage x-40 and reads the data. To this end, the controller x-40 may include at least one processor. For example, the controller x-40 may include a communications processor (CP) that performs control for communication, and an application processor (AP) that controls higher layers such as an application program.

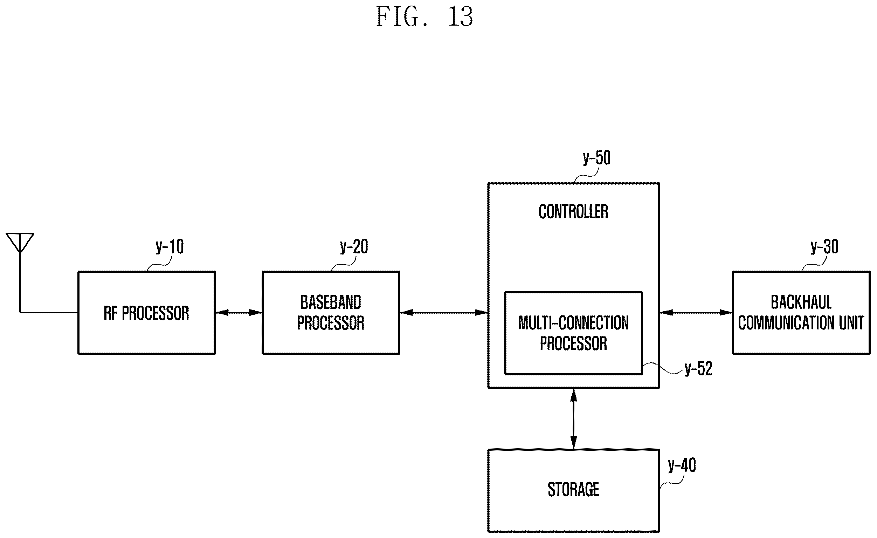

FIG. 13 is a block diagram illustrating a configuration of the gNB according to the disclosure.

As illustrated in FIG. 13, the gNB includes an RF processor y-10, a baseband processor y-20, a backhaul communication unit y-30, a storage y-40, and a controller y-50.

The RF processor y-10 performs a function of transmitting and receiving a signal through a radio channel such as converting a band of the signal or amplifying the signal. That is, the RF processor y-10 up-converts a baseband signal provided from the baseband processor y-20 into an RF band signal and then transmits the RF band signal through an antenna, and down-converts an RF band signal received through the antenna into a baseband signal. For example, the RF processor y-10 may include a transmission filter, a reception filter, an amplifier, a mixer, an oscillator, a DAC, and an ADC, and the like. Although FIG. 13 illustrates only one antenna, the first access node may include a plurality of antennas. The RF processor y-10 may include a plurality of RF chains. The RF processor y-10 may perform beamforming. For the beamforming, the RF processor y-10 may control a phase and a size of each of the signals transmitted and received through a plurality of antennas or antenna elements. The RF processor may perform a downlink MIMO operation by transmitting one or more layers.

The baseband processor y-20 performs a function of a conversion between a baseband signal and a bitstream according to a physical layer standard of the first radio access technology. For example, in data transmission, the baseband processor y-20 generates complex symbols by encoding and modulating a transmission bitstream. Further, in data reception, the baseband processor y-20 restores a reception bitstream by demodulating and decoding a baseband signal provided from the RF processor y-10. For example, in an OFDM scheme, when data is transmitted, the baseband processor y-20 generates complex symbols by encoding and modulating the transmission bitstream, maps the complex symbols to subcarriers, and then configures OFDM symbols through an IFFT operation and CP insertion. In addition, when data is received, the baseband processor y-20 divides a baseband signal provided from the RF processor y-10 in units of OFDM symbols, restores signals mapped with subcarriers through an FFT operation, and then restores a reception bitstream through demodulation and decoding. The baseband processor y-20 and the RF processor y-10 transmit and receive the signal as described above. Accordingly, the baseband processor y-20 and the RF processor y-10 may be referred to as a transmitter, a receiver, a transceiver, a communication unit, or a wireless communication unit.

The backhaul communication unit y-30 provides an interface for communicating with other nodes within the network. That is, the backhaul communication unit y-30 converts a bitstream transmitted from the main base station to another node, for example, a secondary base station or a core network, into a physical signal and converts a physical signal received from the other node into the bitstream.

The storage y-40 stores basic programs, application programs, and data such as configuration information for the operation of the main base station. Particularly, the storage y-40 may store information on bearers allocated to the accessed UE, the measurement result reported from the accessed UE, and the like. The storage y-40 may store information that is a reference for determining whether to provide multiple connections to the UE or stop the same. The storage y-40 provides stored data according to a request from the controller y-50.

The controller y-50 controls the overall operations of the main base station. For example, the controller y-50 transmits and receives a signal through the baseband processor y-20 and the RF processor y-10 or through the backhaul communication unit y-30. The controller y-50 records data in the storage y-40 and reads the data. To this end, the controller y-50 may include at least one processor.

Methods according to embodiments stated in the claims or specifications of the disclosure may be implemented in the form of hardware, software, or a combination of hardware and software.

When the methods are implemented in software, a computer-readable storage medium for storing one or more programs (software modules) may be provided. The one or more programs stored in the computer-readable storage medium may be configured for execution by one or more processors within the electronic device. The one or more programs may include instructions that cause the electronic device to perform methods according to embodiments stated in the claims or specifications of the disclosure.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory constituted by a combination of some or all thereof. Further, a plurality of configuration memories of each thereof may be included.

In addition, the programs may be stored in an attachable storage device which may access through communication networks such as the Internet, an Intranet, a local area network (LAN), wide LAN (WLAN), and a storage area network (SAN), or communication networks constituted by a combination thereof. The storage device may access a device that performs embodiments of the disclosure through an external port. Further, a separate storage device in a communication network may access the device that performs the embodiments of the disclosure.

In detailed embodiments of the disclosure, components included in the disclosure were expressed in the singular or plural form according to a presented detailed embodiment. However, the singular or plural expression may be selected to be suitable for the presented situation for convenience of description, the disclosure is not limited to a singular or a plurality of components, and even components expressed in the plural form may be configured to be singular or even a component expressed in the singular form may be configured to be plural.

Meanwhile, although detailed embodiments are described in the detailed description of the disclosure, various modifications are possible without departing from the scope of the disclosure. Therefore, the scope of the disclosure should not be defined as being limited to the described embodiments, but should be defined by the appended claims and equivalents thereof.

**Claims**

1.   A method of controlling a terminal in a wireless communication system, the method comprising:

   receiving a control message including configuration information related to cell discontinuous transmission (DTX)/discontinuous reception (DRX) and configuration information related to relaxed measurement from a base station;
   determining whether a relaxed measurement performance condition is satisfied for the terminal, based on the configuration information related to the relaxed measurement;
   identifying that a duration in which at least one of a synchronization signal or a reference signal is not received from the base station is initiated based on the configuration information related to the cell DTX/DRX when the relaxed measurement performance condition is satisfied for the terminal; and
   determining whether the relaxed measurement performance condition is satisfied for the terminal during the duration according to a value for a received signal strength acquired before the duration is initiated based on an identification result.

2.   The method of claim 1, further comprising:

   determining the duration, based on the configuration information related to the cell DTX/DRX received from the base station; and
   stopping determining whether the relaxed measurement performance condition is satisfied for the terminal during the duration, based on the identification result.

3.   The method of claim 1, further comprising:

   identifying an active period for the cell DTX/DRX, based on the configuration information related to the cell DTX/DRX received from the base station; and
   configuring a time duration for determining whether the relaxed measurement performance condition is satisfied to correspond to the identified active period.

4.   The method of claim 3, further comprising:

   determining whether the relaxed measurement performance condition is satisfied for the terminal during the time duration at a time point at which the active period ends; and
   configuring a value for a received signal strength valid at the time point at which the active period ends as a reference value for the received signal strength when the relaxed measurement performance condition is not satisfied for the terminal during the time duration at the time point at which the active period ends.

5.   The method of claim 1, further comprising determining that the relaxed measurement performance condition is satisfied for the terminal during the duration, based on the identification result.

6.   The method of claim 1, wherein the duration in which at least one of the synchronization signal or the reference signal is not received from the base station is a non-active period determined based on the configuration information related to the cell DTX/DRX.

7.   The method of claim 1, further comprising:

   determining whether an end of the duration in which at least one of the synchronization signal or the reference signal is not received from the base station arrives earlier than an end of a time duration for determining whether the relaxed measurement performance condition is satisfied;

receiving at least one of the synchronization signal or the reference signal according to the end of the duration in which at least one of the synchronization signal or the reference signal is not received from the base station when the end of the duration in which at least one of the synchronization signal or the reference signal is not received from the base station arrives earlier than the end of the time duration for determining whether the relaxed measurement performance condition is satisfied;

acquiring a value for a received signal strength, based on at least one of the received synchronization signal or reference signal; and

determining whether the relaxed measurement performance condition is satisfied for the terminal, based on the acquired value for the received signal strength.

8. A terminal in a wireless communication system, the terminal comprising:

a transceiver; and
a controller configured to:

receive a control message including configuration information related to cell discontinuous transmission (DTX)/discontinuous reception (DRX) and configuration information related to relaxed measurement from a base station via the transceiver;

determine whether a relaxed measurement performance condition is satisfied for the terminal, based on the configuration information related to the relaxed measurement;

identify that a duration in which at least one of a synchronization signal or a reference signal is not received from the base station is initiated based on the configuration information related to the cell DTX/DRX when the relaxed measurement performance condition is satisfied for the terminal; and

determine whether the relaxed measurement performance condition is satisfied for the terminal during the duration according to a value for a received signal strength acquired before the duration is initiated based on an identification result.

9. The terminal of claim 8, wherein the controller is configured to:

determine the duration, based on the configuration information related to the cell DTX/DRX received from the base station; and

stop determining whether the relaxed measurement performance condition is satisfied for the terminal during the duration, based on the identification result.

10. The terminal of claim 8, wherein the controller is configured to perform control to:

identify an active period for the cell DTX/DRX, based on the configuration information related to the cell DTX/DRX received from the base station; and

configure a time duration for determining whether the relaxed measurement performance condition is satisfied to correspond to the identified active period.

11. The terminal of claim 10, wherein the controller is configured to perform control to:

determine whether the relaxed measurement performance condition is satisfied for the terminal during the time duration at a time point at which the active period ends; and

configure a value for a received signal strength valid at the time point at which the active period ends as a reference value for the received signal strength when the relaxed measurement performance condition is not satisfied for the terminal during the time duration at the time point at which the active period ends.

12. The terminal of claim 8, wherein the controller is configured to perform control to determine that the relaxed measurement performance condition is satisfied for the terminal during the duration, based on the identification result.

13. The terminal of claim 8, wherein the duration in which at least one of the synchronization signal or the reference signal is not received from the base station is a non-active period determined based on the configuration information related to the cell DTX/DRX.

**14.** The terminal of claim 8, wherein the controller is configured to perform control to:

determine whether an end of the duration in which at least one of the synchronization signal or the reference signal is not received from the base station arrives earlier than an end of a time duration for determining whether the relaxed measurement performance condition is satisfied;
receive at least one of the synchronization signal or the reference signal according to the end of the duration in which at least one of the synchronization signal or the reference signal is not received from the base station when the end of the duration in which at least one of the synchronization signal or the reference signal is not received from the base station arrives earlier than the end of the time duration for determining whether the relaxed measurement performance condition is satisfied;
acquire a value for a received signal strength, based on at least one of the received synchronization signal or reference signal; and
determine whether the relaxed measurement performance condition is satisfied for the terminal, based on the acquired value for the received signal strength.

## FIG. 1

# FIG. 2

b-05

NR RRC_CONNECTED

b-10

Resume/Release with
suspend

b-15

NR RRC_INACTIVE

b-25

Establishment/Release

b-20

Release

b-30

NR RRC_IDLE

EP 4 648 504 A1

FIG. 3

# FIG. 4

FIG. 5

e-05 gNB

e-10 UE

SSB periodically broadcast

e-30 Non-active period

Srxlev (Received RSRP)

Srxlev_Ref

e-20 S_SearchDeltaP

e-15

e-25

T1

T2

T_SearchDeltaP

Time

# FIG. 6A

EP 4 648 504 A1

# FIG. 6B

gNB

UE

SSB periodically broadcast

Non-active period

Srxlev
(Received RSRP)

$Srxlev_{Ref}$

$S_{SearchDeltaP}$

f-40

f-45

T1

T2

Time

$T_{SearchDeltaP}$

# FIG. 7

g-05 gNB

g-10 UE

SSB periodically broadcast

g-30

Non-active period

At T2, UE stops $T_{SearchDeltaP}$

Srxlev (Received RSRP)

$Srxlev_{Ref}$

g-15

g-25

g-35

g-40

g-45

g-20

$S_{SearchDeltaP}$

During non-active period, UE suspends to evaluate the low UE mobility

T1  T2  T3  T4  Time

Suspend and resume $T_{SearchDeltaP}$

Configured length of $T_{SearchDeltaP}$

EP 4 648 504 A1

# FIG. 8

Cell DTX cycle

h-10

h-05

h-15

T

If the relaxed measurement criterion has not been met for T,
UE updates $Srxlev_{Ref}$ by current Srxlev at the end of non-active period

UE evaluates if $(Srxlev_{Ref} - Srxlev) < S_{SearchDeltaP}$ during T

The start offset of Cell DTX is in line with the boundary of T
Active period of Cell DTX is T

EP 4 648 504 A1

# FIG. 9

i-05
gNB

i-10
UE

SSB periodically broadcast

i-30

Non-active period

At T2, UE stops $T_{SearchDeltaP}$

Srxlev
(Received RSRP)

i-15

i-25

i-35

i-40

i-45

$S_{SearchDeltaP}$

i-20

$Srxlev_{Ref}$

During non-active period, UE always considers it is not low UE mobility

Updated $Srxlev_{Ref}$

i-50

T1

stop $T_{SearchDeltaP}$

T2

Time

$T_{SearchDeltaP}$

EP 4 648 504 A1

# FIG. 10

UE operation

Receives configuration via System Information or dedicated signalling    ⌇ j-05

Starts evaluating if criterion(s) for Low Mobility has met    ⌇ j-10

Identifies that the non-active period occurs    ⌇ j-15

Keeps evaluating according to the invention    ⌇ j-20

Performs relaxed measurement for Low Mobility,
if considering the criterion as satisfied    ⌇ j-25

FIG. 11

```
          ┌─────────────────────────┐
          │      gNB Operation       │
          └────────────┬────────────┘
                       │
                       ▼
┌───────────────────────────────────────────────────────────┐
│ Transmits configuration via System Information or dedicated │  ~ k-05
│                      signalling                             │
└───────────────────────────────────────────────────────────┘
```

FIG. 12

EP 4 648 504 A1

FIG. 13

## INTERNATIONAL SEARCH REPORT

| International application No. |
|---|
| **PCT/KR2024/095193** |

| A. | CLASSIFICATION OF SUBJECT MATTER |
|---|---|

**H04W 64/00**(2009.01)i; **H04W 76/28**(2018.01)i; **H04W 24/08**(2009.01)i; **H04W 48/08**(2009.01)i

According to International Patent Classification (IPC) or to both national classification and IPC

| B. | FIELDS SEARCHED |
|---|---|

Minimum documentation searched (classification system followed by classification symbols)

H04W 64/00(2009.01); H04L 5/00(2006.01); H04W 24/10(2009.01); H04W 36/00(2009.01); H04W 48/08(2009.01); H04W 48/20(2009.01); H04W 52/02(2009.01); H04W 72/08(2009.01); H04W 76/28(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 저속 이동(low mobility), 셀 경계(cell edge), 완화 측정(relaxed measurement), 불연속(discontinuous), 대기 상태(idle state), 비활성 상태(inactive state)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | EP 2779745 A1 (ORANGE) 17 September 2014 (2014-09-17)<br>   See paragraphs [0079], [0120] and [0133]-[0135]; and claims 1-4 and 6. | 1-14 |
| A | KR 10-2022-0038091 A (SAMSUNG ELECTRONICS CO., LTD.) 25 March 2022 (2022-03-25)<br>   See paragraphs [0106], [0165]-[0183] and [0186]; and claim 1. | 1-14 |
| A | WO 2022-152961 A1 (NOKIA TECHNOLOGIES OY) 21 July 2022 (2022-07-21)<br>   See claims 1, 3-5 and 8. | 1-14 |
| A | US 2021-0314959 A1 (QUALCOMM INCORPORATED) 07 October 2021 (2021-10-07)<br>   See claims 66-78. | 1-14 |
| A | US 2022-0312324 A1 (TELEFONAKTIEBOLAGET LM ERICSSON (PUBL)) 29 September 2022 (2022-09-29)<br>   See paragraphs [0071]-[0075]. | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 May 2024** | **28 May 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095193**

| Patent document cited in search report | | | Publication date (day/month/year) | Patent family member(s) | | | Publication date (day/month/year) |
|---|---|---|---|---|---|---|---|
| EP | 2779745 | A1 | 17 September 2014 | None | | | |
| KR | 10-2022-0038091 | A | 25 March 2022 | CN | 114223241 | A | 22 March 2022 |
| | | | | EP | 4013118 | A1 | 15 June 2022 |
| | | | | US | 2022-0295318 | A1 | 15 September 2022 |
| | | | | WO | 2021-029686 | A1 | 18 February 2021 |
| WO | 2022-152961 | A1 | 21 July 2022 | EP | 4278716 | A1 | 22 November 2023 |
| | | | | US | 2024-0080772 | A1 | 07 March 2024 |
| US | 2021-0314959 | A1 | 07 October 2021 | CN | 115280831 | A | 01 November 2022 |
| | | | | EP | 4128870 | A1 | 08 February 2023 |
| | | | | US | 11582764 | B2 | 14 February 2023 |
| | | | | WO | 2021-202932 | A1 | 07 October 2021 |
| | | | | WO | 2021-202932 | A9 | 25 November 2021 |
| US | 2022-0312324 | A1 | 29 September 2022 | CN | 111919468 | A | 10 November 2020 |
| | | | | EP | 3777352 | A1 | 17 February 2021 |
| | | | | EP | 3777352 | A4 | 29 December 2021 |
| | | | | RU | 2749282 | C1 | 08 June 2021 |
| | | | | US | 11395228 | B2 | 19 July 2022 |
| | | | | US | 2021-0105719 | A1 | 08 April 2021 |
| | | | | WO | 2019-194731 | A1 | 10 October 2019 |

Form PCT/ISA/210 (patent family annex) (July 2022)